# EUROPEAN PATENT APPLICATION

(11) **EP 4 760 673 A1**
(43) Date of publication of application: **17.06.2026**
(21) Application number: 24220206.7
(22) Date of filing: 16.12.2024
(51) Int. Cl.: G08G 1/09, G08G 1/0967, H04W 4/44, H04W 4/46, H04W 4/80, H04W 4/40

(54) **INTELLIGENT TRANSPORT SYSTEM AND METHOD FOR IMPROVING ROAD SAFETY AND METHOD AND AN ELECTRONIC DEVICE FOR A ROAD USER**

(71) Applicant: VOLKSWAGEN AG, 38440 Wolfsburg (DE)
(72) Inventor: Diekhake, Dr. Patrick, 38440 Wolfsburg (DE); Racu, Dr. Razvan, 38440 Wolfsburg (DE)

(57) **Abstract**

The invention refers to an intelligent transport system (10) and a method for improving road safety. Further, the invention pertains to a method and an electronic device (24) for a road user (20). Furthermore, the invention pertains to computer programs.

It is provided that a detected event (18) by a first road user (16) and/or a road infrastructure (14) is broadcasted locally to the environment via direct communication signals and received by surrounding other road users (20). Road users (20) which are connected to or connectable with a backend server (12), upload the received information about the detected event (18) to the backend server (12). Then, other road users (22) not being in range of the broadcasted direct communication signal but connected to the backend server (12) can also be informed and/or warned of the detected event (18).

## Description

The invention refers to an intelligent transport system and a method for improving road safety. Further, the invention pertains to a method and an electronic device for a road user. Furthermore, the invention relates to computer programs.

Vehicle to Everything (V2X) communications are set to become one of the key pillars to increase safety and efficiency in road transportation. For V2X communication different kinds of technologies are available, which are used, among other things, to exchange hazard information.

An example of a V2X communication is the concept of direct communication (or ad-hoc communication) in which information is transmitted between vehicles only in the immediate vicinity (e.g. up to a radius of 1 km) of the transmitter of the communication signal. These communication signals and their associated data can only be received by vehicles within this radius if they support the direct communication technology, and if the data received is not deemed relevant to the receiving vehicle, it is discarded by the vehicle.

Another example of an inter-vehicle communication is network communication. In network-based implementations, the vehicles are connected to, for example, a cloud network and exchange data therewith. A vehicle that detects an event uploads it to the cloud network. Other vehicles can then download the event to be alerted to the event.

### State of the art

Document FR 3 100 203 A1 relates to a method and a device for warning a vehicle in which information representative of road conditions in a determined area of a road environment are received and compared with a history of information representative of road conditions associated with the determined area. An alert is outputted based on the result of the comparison.

Document EP 4 307 269 A1 suggests a Cooperative Intelligent Transport Systems (C-ITS). In response to detecting a situation involving an object detected within an area monitored by the ITS, a Collective Perception Message (CPM) is generated and transmitted. The CPM comprises a reference to the object and an indication to indicate that object is involved in the situation.

Document WO 2015 / 133181 A1 pertains to a communication apparatus, a communication control method, and a program. A reception unit receives messages transmitted from transmission source apparatuses and indicating information and the identifiers of the respective transmission source apparatuses. A control unit executes, in accordance with the types of the messages received by the reception unit, a transmission operation to transmit, as a representative of the particular messages indicating the same information and received from the different transmission source apparatuses identified by the different identifiers, a representative message indicating the same information.

### Description of the invention

In direct communication applications, events are shared with everyone via local broadcasting, but only in a limited range, e.g. in the immediate vicinity of the broadcaster. Although this means that external events can generally be collected by receiving vehicles, these vehicles will discard any events that are deemed irrelevant with respect to the respective receiving vehicle. In network-based applications, the focus is on downloading events, and only events that are detected by a vehicle itself are considered in the upload path. However, there is a general demand to further improve road safety.

This problem is solved by the intelligent transport system and method for improving road safety, the electronic device and method for a road user and the computer programs according to the independent claims. Further advantages and embodiments will become apparent from the dependent claims as well as the following description.

According to an aspect of the invention, an intelligent transport system (ITS) for improving road safety is provided. ITSs may generally use a range of technologies to monitor, evaluate and manage transport systems to improve safety and efficiency, e.g. traffic flow. For example, they link transport infrastructure and vehicles using information and communication technologies, computers, electronics and sensors.

The ITS comprises a backend server, a road infrastructure and/or a first road user, a second road user and a third road user. Each of the road users includes an electronic device. The backend server includes at least one remotely located server which is accessible from any location at any time via a secure and protected Internet connection. In other words, the backend server represents a storage location of a cloud outside of the user's location to which data, applications and computing power may be moved and where these data may be processed.

The road infrastructure may be a road side unit (RSU). A Roadside Unit (RSU) is a device which may be used in ITS and connected vehicle environments. The RSU may be disposed alongside roads or highways to facilitate communication between vehicles and the transportation infrastructure, e.g. for enabling Vehicle-to-Infrastructure (V2I) and V2X communication. The RSU includes a communication module configured to exchange information with vehicles in the vicinity of the RSU. For example, the communication module may be configured to provide communications such as Dedicated Short-Range Communication (DSRC) or Cellular Vehicle-to-Everything (C-V2X) communication.

The (first) electronic device of the first road user and/or the road infrastructure are (each) configured to detect an event in its environment concerning a threat to road safety and to broadcast a (first) road user to Everything (R2X) and/or an Infrastructure to road user (I2R) direct communication signal including information associated with the detected event. More specifically, the first electronic device may include a R2X communication module, a sensor unit configured to at least partially scan the environment of the electronic device for events concerning a threat to road safety, e.g. such as at least one camera or a surround view camera system, and a processor configured to detect an event in its environment concerning a threat to road safety by using the sensor unit (and processing corresponding sensor data) and to broadcast a R2X and/or I2R direct communication signal including information associated with the detected event by using the R2X communication module. The R2X and/or I2R direct communication signal may include an event type, an event position, an event time at which the event was detected and/or a type of the detection means for detecting the event, such as a (front and/or rear) camera or a surround view camera system. Direct communication enables a road user and/or a road infrastructure and other road users to directly communicate between themselves. In other words, the communication between the road users and/or the road infrastructure is not performed via an external communication server or communication node. For example, the, some or each of the road users may be (each) a vehicle in which the electronic device is incorporated, e.g. as part of the control unit and various sensors of the vehicle. In this case, reference is made to Vehicle-to-Everything (V2X) and Infrastructure-to-Vehicle (I2V) communication. V2X communication has enabled the information exchange between vehicles and other nodes and/or may include Vehicle-to-vehicle (V2V), Vehicle-to-Infrastructure (V2I), Vehicle-to-Network (V2N), and/or Vehicle-to-Pedestrian (V2P), for example.

The (second) electronic device of the second road user is configured to receive the R2X and/or I2R direct communication signal (broadcasted by the first road user and/or the road infrastructure) and upload at least a part of (e.g. in its entirety) the information associated with the detected event to the backend server. In other words, the second electronic device is configured to be connected with the backend server for data exchange. Instead of discarding the received information about the detected event due to (spacial and/or temporal) irrelevance for the second electronic device, the electronic device provides the received information about the detected event to the backend server, thereby enriching its data base. The uploaded data may be relevant to other road users. Therefore, the upload of data received from the environment through direct communication signals can help to increase the road safety through the existence of more enriched data bases with more accurate knowledges of the surrounding environments of road users and/or road infrastructures. Advantageously, the number of road user crashes can be significantly reduced as well as the number of associated fatalities.

The (third) electronic device of the third road user is configured to download at least the part of the information associated with the detected event from the backend server and to determine a (current and/or future) relevance of the detected event for the third road user based on the information associated with the detected event. The third electronic device is further configured to output the determined relevance and/or prepare a countermeasure based the determined relevance of the detected event. For example, the downloaded part of the information may comprise at least one of an event type, an event position, an event time at which the event was detected, a type of the detection means for detecting the event and a warning associated with the detected event. Some or each of the enumerated information may be used to determine the relevance of the detected event for the third road user. The warning may be output to the third road user based on the determined relevance, e.g. if the determined relevance exceeds a predetermined threshold. Accordingly, the third road user may be warned and in response to the warning appropriately react to event or the prepared countermeasure may mitigate or substantially negate the risk associated with the detected event for the third road user. Accordingly, the risk of a crash of the third road user due to the event may be reduced and the road safety for the third road user (as well as surrounding road users) can be advantageously improved.

According to an embodiment, the threat to road safety may be related to a road hazard, a driving environment and/or a traffic condition in the environment of the road infrastructure and/or the first electronic device. In particular, the threat to road safety may be related to abnormal traffic conditions. "Abnormal" may mean that the traffic conditions (significantly) deviate from average or expected traffic conditions. The average or expected traffic conditions may be calculated based on historical data of traffic conditions. Examples of road hazard are a slow vehicle, a wrong-way driver, people, animals and/or obstacles on the road or a stationary vehicle, e.g. due to a breakdown or (illegal) parking. Examples of driving environments are weather, such as snow, rain, sun glare, icy roads and so on. Examples of traffic conditions are traffic jam, roadworks, accident or a passing by special emergency vehicle. For example, the particular threat to road safety may be used to determine the event type. The determined event type may be included in the R2X and/or I2R direct communication signal. Accordingly, other road users may be aware of the event type to appropriately determine the relevance of the event for the respective road user and/or to appropriately prepare countermeasures.

According to another embodiment, the first electronic device of the first road user and/or the road infrastructure may not be connected to or may not support a communication with the backend server. In other words, the first electronic device and/or the road infrastructure is not able to upload the detected event to the backend server by itself. Advantageously, due to the upload of the detected event via the second electronic device, the information about the detected event are not lost, e.g. due to a lack of connection or due to a lack of relevance in view of a particular electronic device, and may be used to warn other road users about the detected event.

According to another embodiment, the second electronic device may be configured to determine a relevance of the detected event for the second road user based on the information associated with the detected event and to output the determined relevance and/or prepare a countermeasure based the determined relevance of the detected event, before the upload of the information associated with the detected event to the backend server starts. In other words, the receiving electronic device evaluates the relevance of the received information about the detected event for itself prior to uploading the information to the backend server. Advantageously, the electronic device may earlier prepare and perform countermeasures to mitigate the risk associated with the detected event for the second road user.

According to another embodiment, the second electronic device may be configured to upload the information associated with the detected event to the backend server irrespective of the determined relevance of the detected event for the second road user. In other words, the second electronic device may be configured to upload the information associated with the detected event to the backend server based on a low relevance as well as based on a high relevance to the second electronic device. Thus, even though the received information may be of a low relevance to the second electronic device, the information associated with the detected event are not discarded but uploaded to the backend server to be accessible for other road users to be downloaded. Therefore, the data base of the backend server may be enriched with valuable information so that it is provided with more accurate knowledges of the surrounding environments of road user and/or road infrastructures. Advantageously, the number of road user crashes can be significantly reduced as well as the number of associated fatalities.

According to another embodiment, the second electronic device may be configured to automatically upload the information associated with the detected event to the backend server. In other words, the second electronic device uploads the received information associated with the detected event to the backend server without requiring any user interaction. Compared to manual cloud entries of third party events in which the position information of the manual entries in the cloud may be inaccurate, e.g. due to a time-delayed entry, the automatically uploaded information of the event has a high level of confidence. Due to the high quality of the information, such an event does not require additional confirmation of the backend server, thereby significantly reducing the computational load for enriching the data base of the backend server.

According to another embodiment, the second electronic device may be configured to delete the information associated with the detected event if the information associated with the detected event has been successfully uploaded to the backend server or if a predetermined time has been elapsed since detection of the event or the reception of the R2X and/or I2R direct communication signal. Otherwise the information associated with the detected event may not be deleted. Since the information associated with the event are deleted after it has been uploaded to the backend server, the information is stored or preserved in the backend server and the required memory storage space of the electronic device may be reduced. Furthermore, the required memory storage space of the electronic device may also be reduced in the case in which it can be expected that the event is over and the information associated with the event are deleted based on the predetermined time. The predetermined time may be dependent on the event type of the detected event. For example, some of the event types may be short-time events, such as weather conditions or wrong-way drivers, people, animals and/or obstacles on the road and/or very short-time events, such as emergency braking or an intervention of a safety system of the vehicle, whereas other event types may be long-time events, such as roadworks or stationary vehicles, for example.

According to another embodiment, the broadcasted R2X and/or I2R direct communication signal may include or consist of a Decentralized Environmental Notification Message, DENM, associated with the detected event. In other words, the road infrastructure and/or the first electronic device may be (each) configured to broadcast a R2X and/or I2R direct communication signal including or consisting of a DENM associated with the detected event. A DENM is a message about location and traffic data as well as traffic situations and hazards that is exchanged between road users which is defined in the ETSI standard EN 302 637-3 V1.2.2 (2014-11). The DENM includes information about both the sending road user as well as the event, e.g. a hazard area, to warn other road users. The DENM may be transmitted as a standalone message. Using a standalone message for the DENM allows to use well-established and standardized protocols, thereby reducing the communication effort and increasing the chance that other road user receiving the DENM are also able to process or extract its information accordingly.

According to another embodiment, the second electronic device may be further configured to broadcast a second R2X direct communication signal including a cooperative awareness message, CAM, for indicating the presence of the second road user to surrounding road users and/or road infrastructures. The road infrastructure and/or the first electronic device may be further configured to receive the second R2X direct communication signal and to broadcast or repeatedly broadcast the R2X and/or I2R direct communication signal including the information associated with the detected event in response to the received the second R2X direct communication signal. A CAM is a message which is generated periodically with a frequency controlled by the originating electronic device of the road user and which may include speed, position and steering or direction of the own electronic device of the road user, e.g. of the vehicle, and optionally of surrounding road users, e.g. vehicles, as defined in the ETSI standard EN 302 637-2 V1.4.1 (2019-04). Since the transmitter of a direct communication signal does not receive any responses for acknowledging the reception of the communication signal, the transmittal or re-transmittal of the direct communication signal in response to a received CAM message of the second road user provides a high chance that the second road user will still be in range of the direct communication so as to receive the transmitted direct communication signal from the first road user and/or the road infrastructure. Thus, it is very likely, that the information associated with the detected event will be received and uploaded in the backend server by the second road user.

According to another embodiment, the first R2X and/or I2R direct communication signal and/or the second R2X direct communication signal may be based on a connectionless communication and the upload from the second road user to and/or the download from the third road users from the backend server may be based on a connection oriented communication. Advantageously, the information about the detected event can be exchanged by using or combining different communication techniques, such as connectionless and connection oriented communications and direct and cloud communications.

According to another aspect of the invention, a method for improving road safety is provided. The method may be used for the above-mentioned ITS. The features and the advantages of the ITS can be applied analogously to the method for improving road safety.

According to a step of the method, an event concerning a threat to road safety by a road infrastructure and/or a first road user in its and/or his environment is detected, e.g. by the first electronic device of the first road user and/or the road infrastructure of the ITS.

According to another step of the method, a road user to Everything, R2X, and/or an Infrastructure to road user, I2R, direct communication signal including information associated with the detected event is broadcasted by the road infrastructure and/or the first road user.

According to another step of the method, the R2X and/or I2R direct communication signal is received by a second road user.

According to another step, at least a part of the information associated with the detected event is uploaded from the second road user to a backend server.

According to another step of the method, at least the part of the information associated with the detected event is downloaded from the backend server by a third road user.

According to another step of the method, a relevance of the detected event for the third road user is determined (e.g. by the third road user) based on the information associated with the detected event.

According to another step of the method, the determined relevance of the detected event is outputted and/or a countermeasure based the determined relevance of the detected event is prepared (e.g. by the third road user).

According to another aspect of the invention, a method for a road user is provided. The features and the advantages of the above-mentioned method for improving road safety can be applied analogously to the method for a road user.

According to a step of the method for a road user, a road user to Everything, R2X, and/or an Infrastructure to road user, I2R, direct communication including information associated with an event detected by another road user and/or a road infrastructure is received by the road user.

According to another step of the method for a road user, at least a part of the information associated with the detected event is uploaded from the road user to a backend server.

According to another aspect of the invention, an electronic device configured to perform the above-mentioned method for a road user is provided. The electronic device may be implemented as part of a control unit for a vehicle. The control unit may be configured to perform the above-mentioned method for a road user. The features and the advantages of the above-mentioned method for a road user can be applied analogously to the electronic device and the control unit.

According to another aspect of the invention, a road user including the above-mentioned electronic device configured to perform the above-mentioned method for a road user is provided. The road user may be a vehicle including a V2X communication module and the above-mentioned control unit. The features and the advantages of the above-mentioned electronic device can be applied analogously to the road user.

Each of the above-mentioned electronic devices and/or control units may be implemented by electrical or electronic parts or components (hardware) or by firmware (ASIC). Additionally or alternatively, the functionality of the electronic devices and/or control units may be realized when executing a suitable program (software). Also, the electronic devices and/or control units may be realized by a combination of hardware, firmware and/or software. For example, individual components of the electronic devices and/or control units for providing individual functionalities may be designed as a separate integrated circuits or may be arranged on a common integrated circuits.

The individual components of the electronic devices and/or control units may be designed as one or more processes running on one or more processors in one or more electronic computing devices and generated during execution of one or more computer programs. The computing devices may be configured to cooperate with other components to implement the functionalities described herein. The instructions of the computer programs may be stored in a memory, such as a RAM element. However, the computer programs may also be stored in a non-volatile storage medium, such as a CD-ROM, flash memory or the like.

It is further apparent to the skilled person that the functionalities of a plurality of computing units (data processing devices) may be combined or combined in a single device, or that the functionality of a particular data processing device may be distributed among a plurality of devices to implement the functionality of the electronic devices and/or control unit.

A further aspect relates to a computer program comprising instructions which, when the program is executed by a computer, such as an electronic devices and/or control unit, cause the computer to perform any of the methods according to the invention, in particular a method for improving road safety and/or for a road user.

Further preferred embodiments of the invention result from the additional features mentioned in the dependent claims.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings. It shows:
- Figure 1: schematically shows an intelligent transport system in an exemplary traffic situation according to the present invention;
- Figure 2: schematically shows a flow chart of a method for improving road safety according to the present invention; and
- Figure 3: schematically shows an electronic device for a road user according to the present invention.

In the following, recurring and similar features in this and in the subsequent representations are provided with the same reference numerals and a repetitive description thereof is omitted.

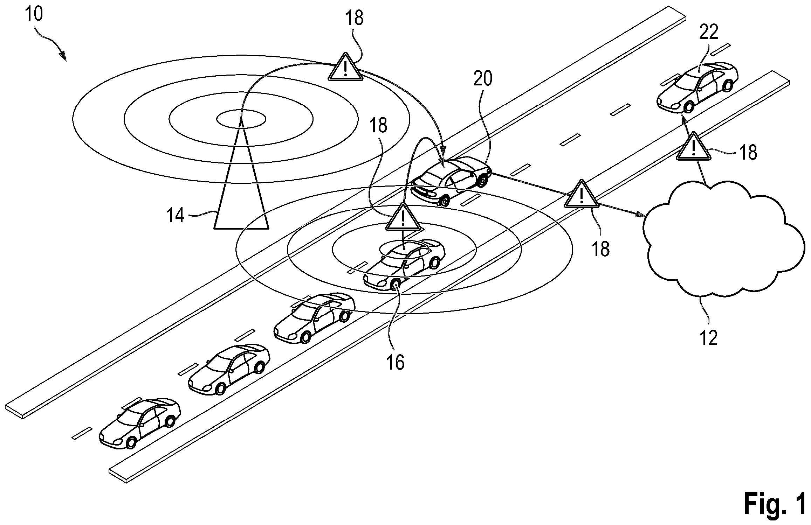

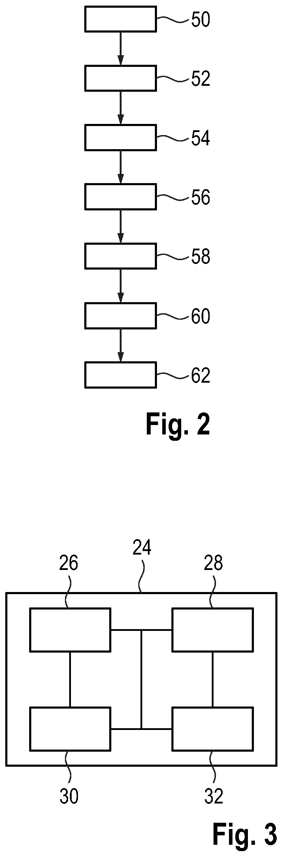

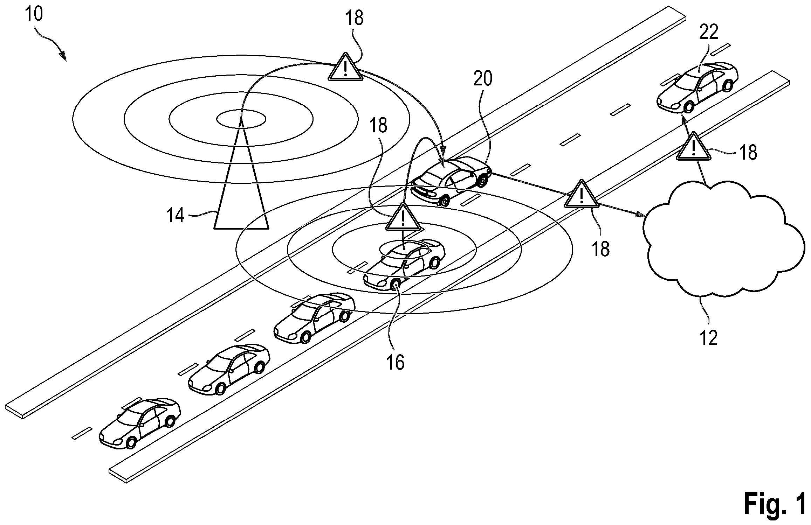

Figure 1 schematically shows an intelligent transport system (ITS) 10 for improving road safety in an exemplary traffic situation according to the present invention. A method for improving road safety and a method for a road user 20 are explained in reference to figure 2. The traffic situation illustrated in figure 1 is to be understood as merely an representative example of a plethora of potential traffic situations and the present invention is not limited thereto.

The ITS 10 includes a backend server 12, a road infrastructure 14, a first road user 16, a second road user 20 and a third road user 22. However, the ITS 10 of the present disclosure is not limited thereto. For example, the road infrastructure 14 or the first road user 16 may also be omitted, for example. Each of the road users 16, 20, 22 includes an electronic device 24 which will be explained in more detail in view of figure 3. In an embodiment, as shown in figure 1, the road users 16, 20, 22 are implemented as vehicles. However, at least one, some or each of the road users 16, 20, 22 may also be a pedestrian or a bicycle or any other kind of road user carrying the electronic device 24, for example.

The backend server 12 is illustrated in figure 1 as a cloud to indicate that the backend server 12 provides cloud-based applications. For example, the backend server 12 includes a plurality of remotely located servers which are accessible from any location at any time via a secure and protected Internet connection. That is, the backend server 12 represents a storage location of a cloud outside of the user's location (e.g. the road users 16, 20, 22) to which data, applications and computing power may be moved and where these data may be processed.

The road infrastructure 14 is implemented as a road side unit (RSU). The road infrastructure 14 is disposed alongside a road or highway (as shown in figure 1) to facilitate communication between road users and any transportation infrastructure, e.g. for enabling Vehicle-to-Infrastructure (V2I) and Vehicle-to-Everything (V2X) communication. The transportation infrastructure may comprise sensors configured to detect the traffic on the street and/or a status of a traffic light, for example. The road infrastructure 14 includes a communication module configured to exchange information with the road users 16, 20, 22 in its vicinity via direct communication.

The first road user 16 represents a vehicle driving into the end of a traffic jam which is indicated in figure 1 by a queue of three vehicles standing in front of the first road user 16. This situation requires the first road user 16 to slow down to not cause an accident, e.g. a rear-end collision with the preceding vehicle. However, when a road user, such as the third road user 22 driving on the same lane as the first road user 16 with a long gap therebetween, is not aware of the end of the traffic jam and does not pay sufficient attention to the traffic, the road user may have to perform an emergency braking to not cause an accident. Emergency breaks, however, may catch following road users off guard, such that a significant risk of an accident may occur.

In the example of figure 1, the road infrastructure 14 and the first road user 16 are not connected to the backend server 12, e.g. due to a (temporal) lack of connection to the backend server 12 or due to a lack of communication means for communicating with the backend server 12, while the second road user 20 and the third road user 22 are connected with the backend server 12. Therefore, events detected by the road infrastructure 14 and the first road user 16 can not be directly uploaded to the backend server 12, e.g. such that the third road user 22 could download the detected event to be aware of the risk associated with the event.

However, the road infrastructure 14 is configured to detect an event 18 in its environment concerning a threat to road safety, such as the traffic jam as shown in figure 1, and to broadcast an Infrastructure to road user (I2R) direct communication signal including information associated with the detected event 18. In addition, the electronic device 24 of the first road user 16 is also configured to detect the event 18 and to broadcast a road user to Everything (R2X) direct communication signal including information associated with the detected event 18. The broadcasted direct communication signals are restricted in its range and only road users in the immediate vicinity, e.g. up to a radius of 1 km, of the road infrastructure 14 and the electronic device 24 of the first road user 16 can receive the direct communication signals. As shown in the example of figure 1, the second road user 20 driving on the opposite lane with respect to the first road user 16 is in range of the direct communication signals. The third road user 22 is too far away to receive the direct communication signals. As the electronic device 24 of the second road user 20 is configured to receive the R2X and I2R direct communication signals from the road infrastructure 14 and the first road user 16, the second road user 20 is able to receive and process the information about the detected event 18. Instead of discarding the received information about the detected event 18 due to irrelevance of the event 18 for the second road user 20, the electronic device 24 of the second road user 20 uploads the received information about the detected event 18 to the backend server 12, thereby enriching its data base. As illustrated in figure 1, the uploaded data regarding the detected event 18 are relevant to other road users, e.g. the third road user 22. Therefore, the upload of data received from the environment through direct communication signals can help to increase the road safety through the existence of more enriched data bases with more accurate knowledges of the surrounding environments of road users 16 and road infrastructures 14. Advantageously, the number of road user crashes can be significantly reduced as well as the number of associated fatalities.

The electronic device 24 of the third road user 22 is configured to download the information associated with the detected event 18 from the backend server 12 and to determine a relevance of the detected event 18 for the third road user 22 based on the information associated with the detected event 18. The electronic device 24 of the third road user 22 may output the determined relevance to the driver of the vehicle and/or may prepare a countermeasure based the determined relevance of the detected event 18. The electronic device 24 of the third road user 22 may conclude that it is required to smoothly slow the vehicle down to reduce the risk of a rear-end collision with the first road user 16 and may present an alert to the driver of the vehicle representing the third road user 22. Accordingly, the risk of a crash of the third road user 22 due to the event 18 can be reduced and the road safety for the third road user 22 (as well as following road users) can be advantageously improved.

Figure 2 schematically shows a flow chart of a method for improving road safety according to the present invention which may be used for the ITS 10 of figure 1.

According to a first step 50 of the method, an event 18 concerning a threat to road safety by a road infrastructure 14 and/or a first road user 16 in its and/or his environment is detected, e.g. by the electronic device 24 of the first road user 16 and/or the road infrastructure 14 of the ITS 10.

According to a second step 52, a R2X and/or an I2R direct communication signal including information associated with the detected event 18 is broadcasted by the road infrastructure 14 and/or the first road user 16.

According to a third step 54, the R2X and/or I2R direct communication signal is received by a second road user 20.

According to a fourth step 56, at least a part of the information associated with the detected event 18 is uploaded from the second road user 20 to a backend server 12.

According to fifth step 58 of the method, at least the part of the information associated with the detected event 18 is downloaded from the backend server 12 by a third road user 22.

According to sixth step 60, a relevance of the detected event for the third road user 22 is determined based on the information associated with the detected event 18.

According to seventh step 62, the determined relevance of the detected event 18 is outputted and/or a countermeasure based the determined relevance of the detected event 18 is prepared, e.g. by the electronic device of the third road user 22.

In particular the method steps related to the second road user 20 may be considered as a further method according to the present invention. That is, figure 2 also schematically shows a flowchart of a method for a road user, i.e. the second road user 20. The method for a road user 20 includes the third and fourth steps 54 and 56.

Figure 3 schematically shows an electronic device 24 for a road user according to the present invention. The electronic device 24 may correspond to the electronic device 24 of the first road user 16. However, the present disclosure is not limited thereto and some or each of the road users 16, 20, 22 as shown in figure 1 may each include the electronic device 24 as shown in figure 3.

The electronic device 24 includes a R2X communication module 26, a sensor unit 28 configured to at least partially scan the environment of the electronic device 24 for events 18 concerning a threat to road safety, a processor 30 and a memory 32. The sensor unit 28 may include at least one camera or a camera system including a plurality of cameras, e.g. a surround view camera system. The processor 30 is configured to detect an event 18 in its environment concerning a threat to road safety by using the sensor unit 28 (and processing corresponding sensor data) and to broadcast and/or receive a R2X direct communication signal including information associated with the detected event by using the R2X communication module 26. The R2X direct communication signal may include an event type, an event position, an event time at which the event was detected and/or a type of the detection means for detecting the event.

The direct communication and/or the communication with the backend server 12 and between the road users 16, 20, 22 and/or the road infrastructure 14 may be based on exchanged radio frequency (RF) signals, such as Bluetooth, Ultra-Wide-Band, Wireless-LAN, 4G and/or 5G mobile telecommunication technologies, for example. However, the present invention is not limited thereto.

### Reference signs

- 10: intelligent transport system
- 12: backend server
- 14: road infrastructure
- 16: first road user
- 18: event concerning a threat to road safety
- 20: second road user
- 22: third road user
- 24: electronic device
- 26: communication module
- 28: sensor unit
- 30: processor
- 32: memory

- 50: first method step - detecting an event
- 52: second method step - broadcasting direct communication signal
- 54: third method step - receiving direct communication signal
- 56: fourth method step - uploading the detected event
- 58: fifth method step - downloading the detected event
- 60: sixth method step - determining relevance of the event
- 62: seventh method step - outputting the determined relevance

## Claims

1. An intelligent transport system, ITS, (10) for improving road safety, comprising:
- a backend server (12),
- a road infrastructure (14) and/or a first road user (16) including a first electronic device, the road infrastructure (14) and/or the first electronic device being configured to:
detect an event (18) in its environment concerning a threat to road safety and
broadcast a road user to Everything, R2X, and/or an Infrastructure to road user, I2R, direct communication signal including information associated with the detected event (18),
- a second road user (20) including a second electronic device (24) configured to:
receive the R2X and/or I2R direct communication signal and
upload at least a part of the information associated with the detected event (18) to the backend server (12),
- a third road user (22) including a third electronic device configured to:
download at least the part of the information associated with the detected event (18) from the backend server (12),
determine a relevance of the detected event (18) for the third road user (22) based on the information associated with the detected event (18) and
output the determined relevance and/or prepare a countermeasure based the determined relevance of the detected event (18).

2. The ITS (10) according to claim 1, wherein the threat to road safety is related to a road hazard, a driving environment and/or a traffic condition in the environment of the road infrastructure (14) and/or the first electronic device.

3. The ITS (10) according to claim 1 or 2, wherein the first electronic device of the first road user (16) and/or the road infrastructure (14) is not connected to or does not support a communication with the backend server (12).

4. The ITS (10) according to any one of the preceding claims, wherein the second electronic device (24) is configured to:
determine a relevance of the detected event (18) for the second road user (20) based on the information associated with the detected event (18) and
output the determined relevance and/or prepare a countermeasure based the determined relevance of the detected event (18), before the upload of the information associated with the detected event (18) to the backend server (12) starts.

5. The ITS (10) according to the preceding claim, wherein the second electronic device (24) is configured to upload the information associated with the detected event (18) to the backend server (12) irrespective of the determined relevance of the detected event (18) for the second road user (20).

6. The ITS (10) according to any one of the preceding claims, wherein the second electronic device (24) is configured to automatically upload the information associated with the detected event (18) to the backend server (12).

7. The ITS (10) according to any one of the preceding claims, wherein the second electronic device (24) is configured to delete the information associated with the detected event (18) if the information associated with the detected event (18) has been successfully uploaded to the backend server (12) or if a predetermined time has been elapsed since detection of the event (18) or the reception of the R2X and/or I2R direct communication signal.

8. The ITS (10) according to any one of the preceding claims, wherein the broadcasted R2X and/or I2R direct communication signal includes or consists of a Decentralized Environmental Notification Message, DENM, associated with the detected event (18).

9. The ITS (10) according to any one of the preceding claims, wherein the second electronic device (24) is further configured to:
broadcast a second R2X direct communication signal including a cooperative awareness message, CAM, for indicating the presence of the second road user (20) to surrounding road users and/or road infrastructures (14), and
the road infrastructure (14) and/or the first electronic device is further configured to:
receive the second R2X direct communication signal and
broadcast or repeatedly broadcast the R2X and/or I2R direct communication signal including the information associated with the detected event (18) in response to the received the second R2X direct communication signal.

10. The ITS (10) according to any one of the preceding claims, wherein the first R2X and/or I2R direct communication signal and/or the second R2X direct communication signal is based on a connectionless communication and the upload from the second road user (20) to and/or the download from the third road users (22) from the backend server (12) is based on a connection oriented communication.

11. A method for improving road safety, including the steps of:
- detecting (50) an event (18) concerning a threat to road safety by a road infrastructure (14) and/or a first road user (16) in its and/or his environment,
- broadcasting (52) a road user to Everything, R2X, and/or an Infrastructure to road user, I2R, direct communication signal including information associated with the detected event (18) by a road infrastructure (14) and/or a first road user (16),
- receiving (54) the R2X and/or I2R direct communication signal by a second road user (20),
- uploading (56) at least a part of the information associated with the detected event (18) from the second road user (20) to a backend server (12)
- downloading (58) at least the part of the information associated with the detected event (18) from the backend server (12) by a third road user (22),
- determining (60) a relevance of the detected event (18) for the third road user (22) based on the information associated with the detected event (18) and
- outputting (62) the determined relevance of the detected event (18) and/or preparing a countermeasure based the determined relevance of the detected event (18).

12. A method for a road user (20), including the steps of:
- receiving (54), by the road user (20), a road user to Everything, R2X, and/or an Infrastructure to road user, I2R, direct communication including information associated with an event (18) detected by another road user (16) and/or a road infrastructure (14) and
- uploading (56) at least a part of the information associated with the detected event (18) from the road user (20) to a backend server (12).

13. An electronic device (24) configured to perform the method according to the preceding claim.

14. A road user (20) including the electronic device (24) according to the preceding claim.

15. A computer program comprising instructions which, when the program is executed by a computer, cause the computer to perform the method according to claims 11 and/or 12.
